# EUROPEAN PATENT APPLICATION

(11) **EP 4 534 221 A1**
(43) Date of publication of application: **09.04.2025**
(21) Application number: 23815963.6
(22) Date of filing: 26.05.2023
(51) Int. Cl.: B22F 1/14, B22F 1/00, B22F 1/05, C22C 22/00, C22C 32/00, C23C 10/48, H01F 1/047

(54) **METHOD FOR MANUFACTURING MAGNETIC PARTICLES, MAGNETIC PARTICLES, AND PERMANENT MAGNET USING SAME**

(30) Priority: 03.06.2022 JP 2022091091
(71) Applicant: AGC INC., Chiyoda-ku, Tokyo 1008405 (JP)
(72) Inventor: ISHIKAWA, Yasunari, Tokyo 100-8405 (JP); DOTO, Hiroshi, Tokyo 100-8405 (JP); NAITO, Koji, Tokyo 100-8405 (JP); TSUKIYAMA, Keishi, Tokyo 100-8405 (JP)
(74) Representative: Müller-Boré & Partner Patentanwälte PartG mbB
(86) International application number: PCT/JP2023/019708
(87) International publication number: WO 2023/234206

(57) **Abstract**

A method for producing magnetic particles containing a manganese-aluminum alloy includes: mixing manganese particles, an aluminum source, an activator containing a halide, and an anti-sintering agent to obtain a mixed powder; heating the mixed powder to calorize the manganese particles by utilizing gaps between particles of the anti-sintering agent formed by the anti-sintering agent, to obtain a treated mixture containing magnetic particles containing a manganese-aluminum alloy, wherein a mass ratio of aluminum to manganese (Al/Mn) in the manganese-aluminum alloy is in a range from 25/75 to 35/65; removing the anti-sintering agent from the treated mixture to recover the magnetic particles containing the manganese-aluminum alloy.

## Description

### TECHNICAL FIELD

The present invention relates to a method for producing magnetic particles and magnetic particles.

### BACKGROUND ART

It has traditionally been known that magnetic particles of a manganese-aluminum alloy containing a τ phase, which is a ferromagnetic phase, can be used as a magnetic material.

### CITATION LIST

### PATENT LITERATURE

PTL 1: Japanese Patent Application Laid-Open Publication No. 2019-44265

### SUMMARY OF THE INVENTION

### TECHNICAL PROBLEM

In general, magnetic particles of a manganese-aluminum alloy containing a τ phase are produced through
(1) formation of a powder by a melt spraying method or the like,
(2) pulverization of the powder into a minute powder, and
(3) aging treatment of the minute powder.

In the process of (1), a large-particle-diameter powder mainly made of an ε phase is formed. Thus, the powder is reduced in size through the process of (2), and a heat treatment (aging treatment) for changing the ε phase into the τ phase is performed in the process of (3).

However, such a production process is complicated, and there is a need for a method that produces magnetic particles of a manganese-aluminum alloy containing the τ phase in a simpler manner.

The present invention has been made in view of such a background, and it is an object of the present invention to provide a method that can produce magnetic particles containing a manganese-aluminum alloy with greater ease. It is also an object of the present invention to provide magnetic particles containing a manganese-aluminum alloy obtained by such a characteristic process.

### SOLUTION TO THE PROBLEM

The present invention provides a method for producing magnetic particles containing a manganese-aluminum alloy, the method including:
mixing manganese particles, an aluminum source, an activator containing a halide, and an anti-sintering agent, to obtain a mixed powder;
heating the mixed powder to a temperature in a range from 1,000 °C to 1,235 °C to calorize the manganese particles by utilizing gaps between particles of the anti-sintering agent formed by the anti-sintering agent, to obtain a treated mixture containing magnetic particles containing a manganese-aluminum alloy, wherein a mass ratio of aluminum to manganese (Al/Mn) in the manganese-aluminum alloy is in a range from 25/75 to 35/65; and
removing the anti-sintering agent from the treated mixture to recover the magnetic particles containing the manganese-aluminum alloy.

Further, the present invention provides magnetic particles, including:
a manganese-aluminum alloy; and
alumina,
wherein an existence proportion of the alumina contained in the magnetic particles is in a range from 0.1% by mass to 15% by mass,
an existence proportion of the manganese-aluminum alloy contained in the magnetic particles is in a range from 85% by mass to 99% by mass,
the manganese-aluminum alloy contains a τ phase, and
an existence proportion of the τ phase contained in the magnetic particles is in a range from 25% by mass to 99% by mass.

### ADVANTAGEOUS EFFECTS OF THE INVENTION

According to the present invention, it is possible to provide a method that can produce magnetic particles containing a manganese-aluminum alloy with greater ease. According to the present invention, it is possible to provide magnetic particles containing a manganese-aluminum alloy obtained by such a characteristic process.

### BRIEF DESCRIPTION OF THE DRAWINGS

[FIG. 1] FIG. 1 is a chart schematically illustrating an example of a flow of a method for producing magnetic particles according to an embodiment of the present invention.
[FIG. 2] FIG. 2 is a view schematically illustrating a state in which a mixed powder is packed in a reaction vessel.
[FIG. 3] FIG. 3 is a chart illustrating an example of a result of X-ray diffraction of a powder (powder A-1) containing magnetic particles according to an embodiment of the present invention.
[FIG. 4] FIG. 4 is a view illustrating results of mapping of oxygen and aluminum in cross-sections of magnetic particles (particles contained in the powder A-1) according to an embodiment of the present invention.

### DETAILED DESCRIPTION OF THE INVENTION

An embodiment of the present invention will now be described below.

An embodiment of the present invention provides a method for producing magnetic particles containing a manganese-aluminum alloy, the method including:
mixing manganese particles, an aluminum source, an activator containing a halide, and an anti-sintering agent, to obtain a mixed powder;
heating the mixed powder to a temperature in a range from 1,000 °C to 1,235 °C to calorize the manganese particles by utilizing gaps between particles of the anti-sintering agent formed by the anti-sintering agent, to obtain a treated mixture containing magnetic particles containing a manganese-aluminum alloy, wherein a mass ratio of aluminum to manganese (Al/Mn) in the manganese-aluminum alloy is in a range from 25/75 to 35/65; and
removing the anti-sintering agent from the treated mixture to recover the magnetic particles containing the manganese-aluminum alloy.

In one embodiment of the present invention, magnetic particles containing a manganese-aluminum alloy containing a τ phase, which is a ferromagnetic phase, are produced by a calorizing treatment.

The calorizing treatment is a technique for causing aluminum to diffuse and permeate a treatment target from the surface thereof to the interior thereof at a high temperature. When manganese particles are used as the treatment target, a manganese-aluminum alloy can be formed through the permeation of aluminum into the manganese particles during the calorizing treatment. Therefore, by setting the ratio of manganese to aluminum and the temperature in the reaction system within predetermined ranges, it is possible to form a manganese-aluminum alloy through the treatment.

In one embodiment of the present invention, magnetic particles containing a manganese-aluminum alloy containing a τ phase can be produced in a single step without undergoing the multiple steps (1) to (3) as described above. Therefore, in one embodiment of the present invention, magnetic particles containing a manganese-aluminum alloy can be produced by a process simpler than existing processes.

When the calorizing treatment is applied to a treatment target containing a small amount of oxygen, reduction of an oxide in the treatment target and oxidation of aluminum occur, and a solid-state contact reaction (thermite reaction) involving major heat generation may occur. When such a thermite reaction occurs, the heat rapidly brings the reaction forward, with no time left for the heat to dissipate to the outside. As a result of the heat accumulation, the reaction system may reach a high temperature that may be some thousand degrees Celsius.

Therefore, in a case where the treatment target has a particle form, the mixture after being treated (hereinafter, referred to as "treated mixture") becomes a lumpy form in which all of the particles are firmly fixed to each other upon occurrence of a thermite reaction that brings the treatment environment to an extremely high temperature.

Moreover, once such a lumpy treated mixture is formed, it is impossible to separate the anti-sintering agent from the treated mixture afterwards. Therefore, there is a problem that calorized particles cannot be recovered from the treated mixture.

However, in the method according to one embodiment of the present invention, the calorizing treatment is performed by utilizing gaps formed between particles of the anti-sintering agent.

Such a feature of the method according to one embodiment of the present invention can greatly reduce the possibility of the manganese particles being fixed to the anti-sintering agent and the like when a thermite reaction occurs in the reaction system. This is because the aforementioned gaps serve to provide multiple reaction "cubicles" that are separated from each other.

As a result, the treated mixture that is produced through the calorizing treatment is not in a lumpy aggregated form as a whole, but in a form in which magnetic particles containing a manganese-aluminum alloy and the anti-sintering agent are separated from each other. Therefore, in the method according to one embodiment of the present invention, the anti-sintering agent can be relatively easily removed from the treated mixture after the calorizing treatment. This in turn makes it possible to relatively easily separate and recover the magnetic particles containing the manganese-aluminum alloy.

Thus, in the method according to one embodiment of the present invention, magnetic particles containing a manganese-aluminum alloy can be produced with ease, and separated and recovered with ease.

### (Method for producing magnetic particles according to one embodiment of the present invention)

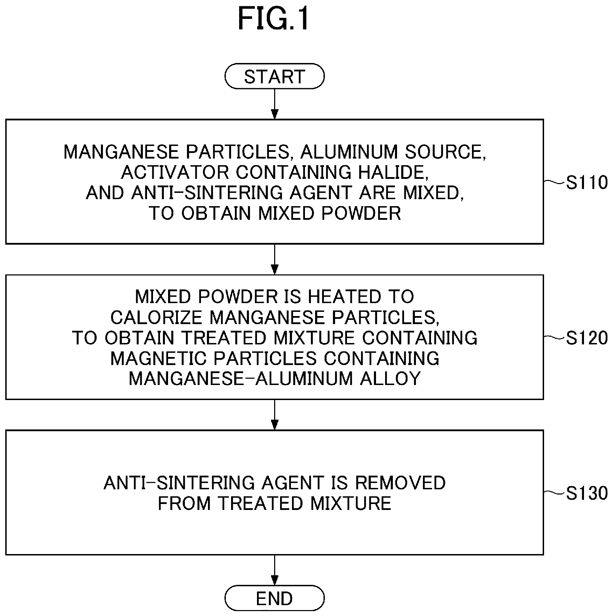

Next, a method for producing magnetic particles according to one embodiment of the present invention will be described in more detail with reference to FIG. 1.

FIG. 1 schematically illustrates an example of a flow of the method for producing magnetic particles according to an embodiment of the present invention.

As illustrated in FIG. 1, the method for producing magnetic particles according to an embodiment of the present invention (hereinafter, referred to as the "first production method") includes:
a step of mixing manganese particles, an aluminum source, an activator containing a halide, and an anti-sintering agent, to obtain a mixed powder (step S110);
a step of heating the mixed powder to calorize the manganese particles, to obtain a treated mixture containing magnetic particles containing a manganese-aluminum alloy (step S120); and
a step of removing the anti-sintering agent from the treated mixture (step S130).

Each of the steps will be described in more detail below.

### (Step S110)

First, a mixed powder is prepared.

The mixed powder contains manganese particles, an aluminum source, an activator, and an anti-sintering agent. Hereinafter, each component will be described.

### (Manganese particles)

The average particle diameter of the manganese particles is selected to be smaller than the average particle diameter of the anti-sintering agent described later. For example, the maximum particle diameter of the manganese particles may be equal to or less than 0.29 times the average particle diameter of the anti-sintering agent.

The average particle diameter of the manganese particles may be, for example, in the range from 5 µm to 300 µm, in the range from 10 µm to 200 µm, or in the range from 10 µm to 50 µm. The smaller the average particle diameter of the manganese particles, the shorter the diffusion distance of Al and the shorter the heat treatment time can be. The smaller the average particle diameter of the magnetic particles containing the manganese-aluminum alloy after the calorizing treatment, the easier it is to increase the bulk molding density, and the easier it is to mold the particles into a desired shape.

In the present application, the "average particle diameter" is measured by the method specified in Japanese Industrial Standards (JIS) Z 8801.

That is, sieves having different mesh sizes are stacked over some stages in an ascending order of the mesh size, and the measurement-target particles are vibrated at a constant amplitude for a certain time to sort the particles. Next, the mass of the particles remaining on each sieve is measured, and a particle-mass-based particle size distribution is graphed. The particle diameter corresponding to a cumulative value of 50% in the obtained particle size distribution is defined as "average particle diameter".

### (Aluminum source)

The aluminum source may be aluminum metal particles or aluminum alloy particles.

The average particle diameter of the aluminum source is selected to be smaller than the average particle diameter of the anti-sintering agent. For example, the average particle diameter of the aluminum source may be equal to or less than 0.29 times the average particle diameter of the anti-sintering agent.

The average particle diameter of the aluminum source may be, for example, in the range from 0.1 µm to 300 µm, the range from 1 µm to 200 µm, or the range from 1 µm to 100 µm. The smaller the average particle diameter of the aluminum source, the easier it is for the aluminum source to enter the gaps between particles of the anti-sintering agent, and the shorter the heat treatment time can be.

### (Activator)

The activator has a function for forming a vapor of a metal halide during the calorizing treatment of the manganese particles, thereby promoting the calorizing treatment.

The activator contains, for example, at least one selected from ammonium chloride, aluminum chloride, and aluminum fluoride. For example, the activator is added to the entirety of the mixed powder in a range from 0.1% by mass to 10% by mass.

### (Anti-sintering agent)

The anti-sintering agent may contain at least one selected from alumina, kaolin, and silicon oxide.

For example, the anti-sintering agent may have at least one shape selected from the group consisting of a spherical shape, a triangular pyramidal shape, a triangular prismatic shape, a tetrahedral shape, a conical shape, and a cylindrical shape.

The anti-sintering agent has a sufficiently large average particle diameter compared to the manganese particles and the aluminum source. For example, the average particle diameter of the anti-sintering agent is selected to be equal to or greater than 3.4 times the maximum particle diameter of the manganese particles and the average particle diameter of the aluminum source.

The average particle diameter of the anti-sintering agent may be, for example, in the range from 50 µm to 5,000 µm.

### (Mixed powder)

A mixed powder is prepared by mixing the above components.

The amount of the manganese particles contained in the entirety of the mixed powder is, for example, in the range from 3% by mass to 45% by mass. The amount of the aluminum source contained in the entirety of the mixed powder is, for example, in the range from 1% by mass to 15% by mass. The amount of the anti-sintering agent contained in the entirety of the mixed powder can be appropriately adjusted based on the amount of the manganese particles and the amount of the aluminum source, but is, for example, in the range from 40% by mass to 96% by mass.

In the mixed powder, the aluminum source is added such that the mass ratio of aluminum to manganese (Al/Mn) contained in the manganese-aluminum alloy particles to be produced is in the range from 25/75 to 35/65.

### (Step S120)

Next, the mixed powder prepared in the step S110 is subjected to heat treatment. For this purpose, the mixed powder may be packed in a reaction vessel.

Heating the reaction vessel effects the calorizing treatment of the manganese particles. That is, aluminum produced from the aluminum source diffuses and permeates the manganese particles, to form magnetic particles containing a manganese-aluminum alloy.

When the reaction vessel is heated, a large amount of heat occurs due to a thermite reaction between the mixed powder particles. This is because aluminum reacts with a small amount of oxygen contained in the manganese particles.

When such a thermite reaction occurs, the interior of the reaction vessel becomes an extremely high temperature, and the mixture after being treated, that is, the "treated mixture" may become a lumpy form in which all of the particles are firmly fixed to each other. Moreover, once such a lumpy treated mixture is produced, there may occur a problem that the anti-sintering agent cannot be separated from the treated mixture afterwards.

In contrast, the first production method can significantly inhibit formation of a lumpy mixture.

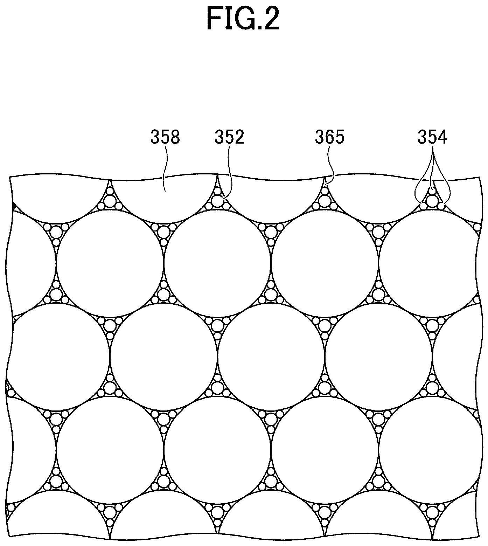

This feature will be described below with reference to FIG. 2.

FIG. 2 schematically illustrates an example of a form in which the mixed powder is packed in the reaction vessel. As illustrated in FIG. 2, manganese particles 352, an aluminum source 354, an activator, and an anti-sintering agent 358, which are the constituent components of the mixed powder, are packed in the reaction vessel.

In FIG. 2, the activator is omitted. It is also assumed here that each component of the mixed powder is spherical.

Here, when the diameter (denoted by ϕ_{S}) of the anti-sintering agent 358 is sufficiently larger than the diameter (denoted by ϕ_{Mn}) of the manganese particles 352 and the diameter (denoted by ϕ_{A1}) of the aluminum source 354, voids 365 are formed between adjacent particles of the anti-sintering agent 358. The manganese particles 352 and the aluminum source 354 are distributed in the voids 365 formed by the anti-sintering agent 358.

When the reaction vessel is heated with each component of the mixed powder distributed in this way, it is possible to greatly reduce the possibility of the manganese particles 352 being fixed to either or both of the anti-sintering agent 358 and other manganese particles 352 upon occurrence of a thermite reaction in the reaction vessel. This is because the voids 365 serve to provide multiple reaction "cubicles" for the calorizing treatment.

As a result, the treated mixture produced through the heat treatment does not have a lumpy aggregated form as a whole, and is instead in a state in which the magnetic particles containing a manganese-aluminum alloy and the anti-sintering agent 358 are separated from each other. Therefore, the magnetic particles containing the manganese-aluminum alloy can be recovered from the treated mixture in a subsequent step.

The packing ratio of the anti-sintering agent 358 is preferably in the range from 50% to 80%.

Thus, in the first production method, the calorizing treatment of the manganese particles 352 can be performed utilizing the voids 365 generated between particles of the anti-sintering agent 358.

The treatment atmosphere for the calorizing treatment needs only to be an atmosphere containing no oxygen, and is, for example, an argon gas atmosphere.

The treatment temperature is in the range from 1,000 °C to 1,235 °C, preferably in the range from 1,150 °C to 1,230 °C, and more preferably in the range from 1,190 °C to 1,225 °C. When the treatment temperature is low, the amount of the τ phase to be formed is low, and when the treatment temperature is too high, aggregation into a lumpy state occurs.

The retention time at the maximum temperature is, for example, 0.5 hours or longer, preferably 10 hours or longer, and more preferably 20 hours or longer.

Cooling after the treatment may be furnace cooling, optionally with control of the cooling rate. The cooling rate may be, for example, in the range from 0.01 °C/min to 100 °C/min. However, the temperature may be temporarily retained at a predetermined temperature during the cooling.

The cooling temperature may be controlled stepwise.

The pressure in the reaction vessel is, for example, in the range from 1 atm to 30 atm. The pressure is preferably 1.5 atm or higher, more preferably 2 atm or higher, yet more preferably 3 atm or higher.

The pressure is preferably 30 atm or lower, more preferably 20 atm or lower, yet more preferably 10 atm or lower.

The treatment pressure may be increased by airtight sealing of the reaction vessel used in the reaction. In this case, for example, the pressure in the reaction vessel may be increased through gasification of the activator. Such an activator may contain at least one selected from ammonium chloride, aluminum chloride, and aluminum fluoride.

Alternatively, the pressure in the reaction vessel may be increased by filling the reaction vessel with additional gas. In this case, the additional gas may be selected from inert gas, hydrogen, or chlorine.

The activator may be added in the range from 0.5% by mass to 15% by mass relative to the entirety of the mixed particles.

The temperature and the pressure may be independently controlled.

### (Step S130)

Next, the anti-sintering agent is removed from the powdery treated mixture formed in the step S120. The anti-sintering agent may be removed, for example, by sieving the treated mixture using a sieve through which only particles having a small average particle diameter are passed.

As described above, the first production method can significantly inhibit temperature rise in the reaction system caused by excessive heat accumulation that may occur due to a thermite reaction.

Therefore, in the first production method, the anti-sintering agent and the magnetic particles containing the manganese-aluminum alloy can be relatively easily separated.

By the above steps, the first production method can produce magnetic particles containing a manganese-aluminum alloy through a single treatment step.

The first production method has a feature that a small amount of alumina is contained in the obtained magnetic particles.

This is considered to be because a part of the aluminum that is a constituent of the manganese-aluminum alloy is oxidized during the calorizing treatment.

The amount of alumina contained in the produced magnetic particles is in the range from 0.1% by mass to 15% by mass, and may be in the range from 1% by mass to 10% by mass relative to the weight of the magnetic particles.

The amount of the manganese-aluminum alloy contained in the magnetic particles is in the range from 85% by mass to 99% by mass, and may be in the range from 86% by mass to 98% by mass. As compounds other than those mentioned above, compounds in which any or all of Mn, Al, and O are combined may be contained. Examples of unavoidable impurities include: nitrogen, chlorine, phosphorus, sulfur, silicon, zinc, iron, boron, carbon, and the like; oxides, nitrides, carbides thereof; and composite materials thereof.

In the manganese-aluminum alloy contained in the magnetic particles, the τ phase may be in the range from 25% by mass to 99% by mass relative to the manganese-aluminum alloy. The τ phase is preferably 30% by mass or more, and more preferably 50% by mass or more relative to the manganese-aluminum alloy.

In addition to the τ phase, the manganese-aluminum alloy contained in the magnetic particles may contain at least one selected from an ε phase, a β phase, and a γ phase.

In the present application, the τ phase means MnAl having a tetragonal structure. The ε phase means MnAl having a hexagonal structure. The β phase means Mn₃Al₂ having a cubic structure. The γ phase means Mn₅Al₈ having a rhombohedral structure.

However, it is preferable that the ε phase is present in an amount of 10% by mass or less relative to the entirety of the manganese-aluminum alloy.

### (Magnetic particles according to an embodiment of the present invention)

Next, magnetic particles according to an embodiment of the present invention will be described.

An embodiment of the present invention provides magnetic particles, including:
a manganese-aluminum alloy; and
alumina
wherein an existence proportion of the alumina contained in the magnetic particles is in a range from 0.1% by mass to 15% by mass,
an existence proportion of the manganese-aluminum alloy contained in the magnetic particles is in a range from 85% by mass to 99% by mass,
the manganese-aluminum alloy contains a τ phase, and
an existence proportion of the τ phase contained in the magnetic particles is in a range from 25% by mass to 99% by mass.

The existence proportion of the τ phase is, for example, 50% by mass or more, preferably 60% by mass, and more preferably 70% by mass or more.

In one embodiment of the present invention, the a-axis of the lattice of the τ phase contained in the magnetic particles may be shorter than 2.775 Å, which is the value of the a-axis of Al0.89Mn1.11 (PDF01-071-5837) registered in the ICDD database (hereinafter referred to as "database a-axis value").

For example, the a-axis may be 0.2% or more shorter than the database a-axis value.

The C-axis of the lattice of the τ phase contained in the magnetic particles may be longer than 3.540 Å, which is the C-axis value of Al0.89Mn1.11 (PDF01-071-5837) registered in the ICDD database (hereinafter referred to as "database C-axis value").

For example, the C-axis may be 2% or more longer than the database C-axis value.

The length of the C-axis of the lattice may be 3.585 Å or longer, preferably 3.595 Å or longer, and more preferably 3.605 Å or longer.

The magnetic particles according to one embodiment of the present invention are produced by a calorizing treatment such as in the first production method described above. In the calorizing treatment, a small amount of alumina is formed when aluminum permeates and alloys with the manganese particles.

For this reason, the magnetic particles according to one embodiment of the present invention have a feature of containing alumina in addition to the manganese-aluminum alloy.

It is preferable that the existence proportion of alumina contained in the magnetic particles is low. The lower limit is 0.1% by mass or more, and may be 1% by mass or more, 2% by mass or more, or 2.5% by mass or more. The upper limit is preferably 15% by mass or less, and more preferably 10% by mass or less. When the existence proportion of alumina decreases, the existence proportion of the nonmagnetic phase decreases, which can increase the existence proportion of the τ phase, which is the ferromagnetic phase.

In general, alumina tends to be distributed on the outermost surface of the magnetic particles unevenly. However, alumina may also exist inside the magnetic particles.

The existence proportion of the τ phase contained in the magnetic particles according to on embodiment of the present invention is in the range from 25% by mass to 99% by mass, preferably 30% by mass or more, and more preferably 50% by mass or more.

In the magnetic particles according to one embodiment of the present invention, the manganese-aluminum alloy may contain at least one selected from an ε phase, a β phase, and a γ phase in addition to the τ phase. However, the amount of the ε phase contained in the manganese-aluminum alloy is preferably 10% by mass or less.

The manganese-aluminum alloy contained in the magnetic particles according to one embodiment of the present invention may contain from 65% by mass to 75% by mass of manganese and from 25% by mass to 35% by mass of aluminum.

The magnetic particles according to one embodiment of the present invention may have a substantially spherical shape. In this case, the magnetic particles according to one embodiment of the present invention may have an average particle diameter in the range from 7 µm to 500 µm, in the range from 10 µm to 300 µm, or in the range from 15 µm to 200 µm. The smaller the average particle diameter of the magnetic particles, the easier it is to increase the bulk molding density, and the easier it is to mold the magnetic particles into a desired shape.

The magnetic particles according to one embodiment of the present invention having such features can be applied to a permanent magnet.

For example, it is possible to produce a MnAl-based permanent magnet by molding and sintering a powder containing the magnetic particles according to one embodiment of the present invention. The MnAl-based permanent magnet may have a desirably selected shape. Examples include a rectangular parallelepiped, an arch shape, a C-shape, and the like.

The production method of a MnAl-based permanent magnet using the magnetic particles according to one embodiment of the present invention will be described below. However, the production method of a MnAl-based permanent magnet is not limited to this, and other publicly-known methods may be used. For example, the MnAl-based permanent magnet according to the present embodiment may be produced by hot working.

In the molding step, a pulverized powder is molded into an intended shape. The molding may be performed by any desirably selected method. In this embodiment, the magnetic particles are packed in a mold and pressed. The obtained molded body is sintered in a vacuum or an inert gas atmosphere to obtain a sintered body.

In this embodiment, dry molding in which the magnetic particles are molded as they are is illustrated. However, wet molding in which a slurry obtained by dispersing the magnetic particles in a solvent such as oil is molded can also be used. The shape of the molded body obtained by molding the magnetic particles can be any desirable shape.

The MnAl-based permanent magnet according to the present embodiment obtained by the above method is obtained as a MnAl-based permanent magnet product through magnetization. The MnAl-based permanent magnet according to the present embodiment is suitably used in applications such as motors and power generators.

The production method of the permanent magnet is not particularly limited as long as the effect of the present invention is not impaired, and various hitherto publicly-known production methods can be used.

### Examples

Examples of the present invention will be described below. In the following description, Examples 1 to 5, Examples 21 to 24, Examples 31 to 33, and Examples 41 to 42 are Examples. Examples 6 to 8 are Comparative Examples.

### (Example 1)

A powder was prepared by the following method.

First, 69 g of manganese particles (having an average particle diameter of 10 µm) and 31 g of aluminum particles (200 mesh) as an aluminum source were thoroughly mixed together with 300 ml of ethanol by ball milling (with 10 mmϕ Monomaron balls), to obtain a first powder.

Next, ammonium chloride particles (0.5% by mass) as an activator and spherical alumina particles (74.6% by mass) having a diameter of 1 mm as an anti-sintering agent were added to the first powder (24.9% by mass), and these particles were thoroughly mixed to prepare a mixed powder.

In the mixed powder, the ratio of the aluminum particles to the content X of the manganese particles and the content Y of the aluminum particles (Y/(X+Y)) was 31% by mass.

Next, the mixed powder was packed in a heat-resistant container having a cap. According to the calculation, the packing proportion of alumina particles was 74% by volume. The manganese particles, the aluminum particles, and the ammonium chloride particles were packed so as to occupy 80% of voids, which were the remaining 26%.

Next, after the interior of the heat-resistant container was depressurized and purged with an argon atmosphere, the heat-resistant container was heated to 1,210 °C. After being retained at 1,210 °C for 10 hours, the heat-resistant container was cooled in a furnace.

Then, the treated mixture was removed from the heat-resistant container, and sifted through a sieve having a mesh size of 850 µm, to remove the alumina powder. As a result, a powder containing approximately spherical particles (hereinafter, referred to as "powder A-1") was obtained.

### (Examples 2 to 8)

Powders were produced by the same method as in Example 1. However, in Examples 2 to 8, the conditions of the calorizing treatment and the like were changed from those in Example 1.

The obtained powders are referred to as "powder A-2" to "powder A-8", respectively.

Table 1 below indicates the production conditions for the powder A-1 to the powder A-8.

**Table 1**

| Ex. | Powder NO. | Mixed powder | | | | | Treatment conditions | |
|---|---|---|---|---|---|---|---|---|
| | | Manganese particle content X (% by mass) | Aluminum particle content Y (% by mass) | Y/(X+Y) | Activator content (% by mass) | Alumina particle content (% by mass) | Temperature (°C) | Retention time (h) |
| 1 | A-1 | 17.2 | 7.7 | 31 | 0.5 | 74.6 | 1,210 | 10 |
| 2 | A-2 | 17.2 | 7.7 | 31 | 0.5 | 74.6 | 1,205 | 10 |
| 3 | A-3 | 17.2 | 7.7 | 31 | 0.5 | 74.6 | 1,200 | 10 |
| 4 | A-4 | 17.2 | 7.7 | 31 | 0.5 | 74.6 | 1,195 | 10 |
| 5 | A-5 | 17.2 | 7.7 | 31 | 0.5 | 74.6 | 1,219 | 10 |
| 6 | A-6 | 17.2 | 7.7 | 31 | 0.5 | 74.6 | 1,239 | 10 |
| 7 | A-7 | 17.2 | 7.7 | 31 | 0.5 | 74.6 | 865 | 10 |
| 8 | A-8 | 17.2 | 7.7 | 31 | 0.5 | 74.6 | 750 | 10 |

### (Example 21)

A powder was prepared by the same method as in Example 1.

However, in Example 21, the ratio of the aluminum particles to the content X of the manganese particles and the content Y of the aluminum particles (Y/(X+Y)) in the mixed powder was 32% by mass.

The temperature of the calorizing treatment was set to 1,210 °C.

Hereinafter, the obtained powder is referred to as "powder B-1".

### (Examples 22 to 24)

Powders were produced by the same method as in Example 21.

However, in these Examples 22 to 24, the calorizing conditions were changed from those in Example 21.

The obtained powders are referred to as "powder B-2" to "powder B-4", respectively.

Table 2 below indicates the production conditions for the powder B-1 to the powder B-4.

**Table 2**

| Ex. | Powder NO. | Mixed powder | | | | | Treatment conditions | |
|---|---|---|---|---|---|---|---|---|
| | | Manganese particle content X (% by mass) | Aluminum particle content Y (% by mass) | Y/(X+Y) | Activator content (% by mass) | Alumina particle content (% by mass) | Temperature (°C) | Retention time (h) |
| 21 | B-1 | 16.8 | 7.9 | 32 | 0.5 | 74.8 | 1,210 | 10 |
| 22 | B-2 | 16.8 | 7.9 | 32 | 0.5 | 74.8 | 1,205 | 10 |
| 23 | B-3 | 16.8 | 7.9 | 32 | 0.5 | 74.8 | 1,200 | 10 |
| 24 | B-4 | 16.8 | 7.9 | 32 | 0.5 | 74.8 | 1,195 | 10 |

### (Example 31)

A powder was produced by the same method as in Example 1.

However, in Example 31, the ratio of the aluminum particles to the content X of the manganese particles and the content Y of the aluminum particles (Y/(X+Y)) in the mixed powder was 33% by mass.

The temperature of the calorizing treatment was set to 1,210 °C.

Hereinafter, the obtained powder is referred to as "powder C-1".

### (Examples 32 and 33)

Powders were produced by the same method as in Example 31.

However, in these Examples 32 and 33, the calorizing conditions were changed from those in Example 31.

Hereinafter, the obtained powders are referred to as "powder C-2" and "powder C-3", respectively.

Table 3 below indicates the production conditions for the powders C-1 to C-3.

**Table 3**

| Ex. | Powder NO. | Mixed powder | | | | | Treatment conditions | |
|---|---|---|---|---|---|---|---|---|
| | | Manganese particle content X (% by mass) | Aluminum particle content Y (% by mass) | Y / (X+Y) | Activator content (% by mass) | Alumina particle content (% by mass) | Temperature (°C) | Retention time (h) |
| 31 | C-1 | 16.4 | 8.1 | 33 | 0.5 | 75 | 1,210 | 10 |
| 32 | C-2 | 16.4 | 8.1 | 33 | 0.5 | 75 | 1,205 | 10 |
| 33 | C-3 | 16.4 | 8.1 | 33 | 0.5 | 75 | 1,195 | 10 |

### (Example 41)

A powder was produced by the same method as in Example 1.

However, in Example 41, the composition of the mixed powder was changed from that in Example 1. In particular, the amount of the activator contained in the mixed powder was 1.5% by mass.

Further, the calorizing treatment conditions were changed from those in Example 1. Especially, the calorizing treatment was performed in an airtightly sealed reaction vessel. The pressure in the vessel during the treatment rose to a maximum of 3.25 atm.

Hereinafter, the obtained powder is referred to as "powder D-1".

### (Example 42)

A powder was produced by the same method as in Example 41.

However, in this Example 42, the calorizing conditions were changed from those in Example 41.

Hereinafter, the obtained powder is referred to as "powder D-2".

Table 4 below collectively indicates the production conditions of the powder D-1 and the powder D-2.

**[Table 4]**

| Ex. | Powder NO. | Mixed powder | | | | | Treatment conditions | | |
|---|---|---|---|---|---|---|---|---|---|
| | | Manganese particle content X (% by mass) | Aluminum particle content Y (% by mass) | Y / (X+Y) | Activator content (% by mass) | Alumina particle content (% by mass) | Temperature (°C) | Pressure (atm) | Retention time (h) |
| 41 | D-1 | 16.8 | 7.9 | 32 | 1.5 | 74.8 | 1,215 | 3.25 | 20 |
| 42 | D-2 | 16.8 | 7.9 | 32.5 | 1.5 | 74.8 | 1,220 | 3.25 | 20 |

### (Evaluation)

The following evaluations were performed using each powder.

### (X-ray diffraction analysis)

An X-ray diffraction analysis of each powder was performed using an X-ray diffractometer (obtained from Rigaku, SmartLab). The mass fraction of each phase contained in the powder and the lattice constants of the τ phase were determined based on the obtained diffraction patterns by the Rietveld analysis method.

The Rietveld analysis was performed using a program RIETAN-FP.

The extended split Pseudo-Voigt function of Toraya was used as the profile function. The fitting was performed such that the reliability factor Rwp (R-weighted pattern), which was a common criterion, would be < 10% for the entire analysis range.

The analysis range was set to 2θ being a range from 10° to 120°.

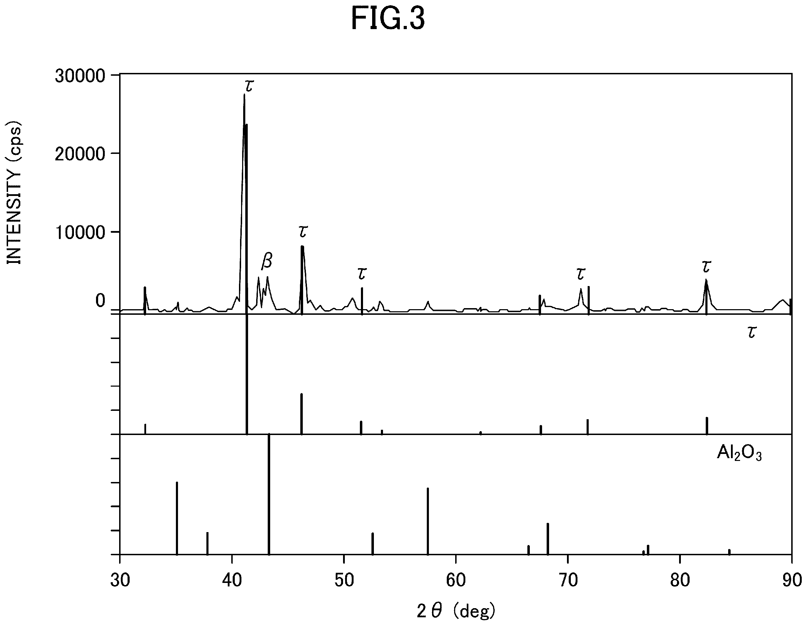

Fig. 3 illustrates, as an example, X-ray diffraction results of the powder A-1 between 30° and 90°.

It can be seen from FIG. 3 that the powder A-1 mainly contains a manganese-aluminum alloy and alumina. As the manganese-aluminum alloy, the τ phase and the β phase were detected.

Table 5 below collectively indicates the calculated existence proportion of each phase in each powder and the lattice constants of the τ phase.

**Table 5**

| Ex. | Powder NO. | Temp. (°C) | Existence proportion (%) | | | | | | | Lattice constant | | |
|---|---|---|---|---|---|---|---|---|---|---|---|---|
| | | | τ phase | γ phase | β phase | ε phase | Al₂O₃ | Mn₄N | Total | a | c | c/a |
| 1 | A-1 | 1, 210 | 52 | 25 | 6 | 6 | 11 | N.D. | 100 | 2.761 | 3.585 | 1.298 |
| 2 | A-2 | 1,205 | 37 | 46 | 2 | 5 | 9 | 1 | 100 | 2.768 | 3.599 | 1.300 |
| 3 | A-3 | 1,200 | 25 | 63 | N.D. | 4 | 6 | 2 | 100 | 2.766 | 3.602 | 1.303 |
| 4 | A-4 | 1,195 | 32 | 53 | 2 | 5 | 7 | 2 | 100 | 2.768 | 3.603 | 1.302 |
| 5 | A-5 | 1,219 | 34 | 13 | 32 | 4 | 10 | 7 | 100 | 2.769 | 3.585 | 1.295 |
| 6 | A-6 | 1,239 | 3 | 3 | 70 | 1 | 8 | 14 | 100 | - | - | - |
| 7 | A-7 | 865 | 21 | *27* | 45 | <1 | 4 | 2 | 101 | - | - | - |
| 8 | A-8 | 750 | 1 | 47 | 44 | N.D. | 3 | 6 | 101 | - | - | - |
| 21 | B-1 | 1,210 | 42 | 37 | 11 | 1 | 6 | 2 | 100 | 2.766 | 3.596 | 1.300 |
| 22 | B-2 | 1,205 | 51 | 34 | 1 | 5 | 7 | 2 | 100 | 2.768 | 3.596 | 1.299 |
| 23 | B-3 | 1,200 | 34 | 51 | N.D. | 6 | 7 | 3 | 100 | 2.765 | 3.599 | 1.301 |
| 24 | B-4 | 1,195 | 35 | 51 | N.D. | 5 | 6 | 3 | 100 | 2.765 | 3.599 | 1.301 |
| 31 | C-1 | 1,210 | 25 | 55 | N.D. | 2 | 13 | 5 | 100 | 2.767 | 3.602 | 1.302 |
| 32 | C-2 | 1,205 | 76 | 12 | 2 | 4 | 5 | 1 | 100 | 2.770 | 3.594 | 1.298 |
| 33 | C-3 | 1,195 | 39 | 8 | 41 | 3 | 5 | 4 | 100 | 2.765 | 3.591 | 1.299 |
| 41 | D-1 | 1,215 | 83 | 12 | 4 | N.D. | 1 | N.D. | 100 | 2.773 | 3.590 | 1.295 |
| 42 | D-2 | 1,220 | 79 | 16 | 5 | N.D. | 1 | N.D. | 101 | 2.773 | 3.586 | 1.293 |

It can be seen from Table 5 that the powders A-1 to A-5, the powders B-1 to B-4, the powders C-1 to C-3, and the powders D-1 and D-2 contain the τ phase and alumina.

It was revealed that the τ phase existed in an amount of 25% by mass or more and alumina existed in an amount of 1% by mass or more in these powders.

It was revealed that the a-axis length among the measured lattice constants of the powders A-1 to A-5, the powders B-1 to B-4, the powders C-1 to C-3, and the powders D-1 and D-2 was shorter than the database a-value (2.775 Å). In particular, it was revealed that the a-axis of all of the powders was 0.2% or more shorter than the database a-value.

Further, it was revealed that the C-axis length among the measured lattice constants of the powders A-1 to A-5, the powders B-1 to B-4, the powders C-1 to C-3, and the powders D-1 and D-2 was longer than the database C-value (3.540 Å). In particular, it was revealed that the C-axis of all of the powders was 2% or more longer than the database C-value.

### (Observation of Particles)

The cross-sections of the particles contained in each powder were observed using EPMA (obtained from JEOL Ltd., JXA-8230). Elemental mapping of the cross-sections of the particles was performed using EPMA.

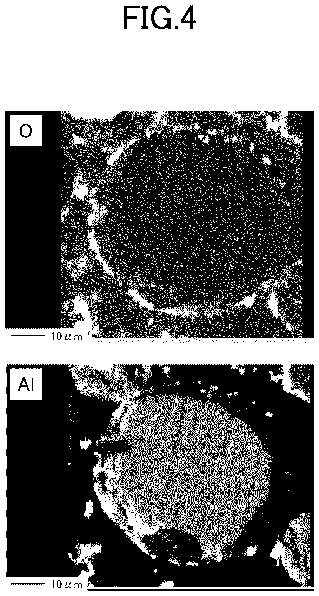

FIG. 4 illustrates the result of the elemental mapping of the cross-sections of the powder A-1 as an example.

From this map, it was found that alumina was distributed on the outer surface of the particles unevenly.

### (Aspects of the present invention)

The present invention may have the following aspects.

### (Aspect 1)

A method for producing magnetic particles containing a manganese-aluminum alloy, the method including:
mixing manganese particles, an aluminum source, an activator containing a halide, and an anti-sintering agent, to obtain a mixed powder;
heating the mixed powder to a temperature in a range from 1,000 °C to 1,235 °C to calorize the manganese particles by utilizing gaps between particles of the anti-sintering agent formed by the anti-sintering agent, to obtain a treated mixture containing magnetic particles containing a manganese-aluminum alloy, wherein a mass ratio of aluminum to manganese (Al/Mn) in the manganese-aluminum alloy is in a range from 25/75 to 35/65; and
removing the anti-sintering agent from the treated mixture to recover the magnetic particles containing the manganese-aluminum alloy.

### (Aspect 2)

The method according to Aspect 1,
wherein the activator contains at least one selected from the group consisting of ammonium chloride, aluminum chloride, and aluminum fluoride.

### (Aspect 3)

The method according to Aspect 1 or 2,
wherein an amount of the activator is in a range from 0.1% by mass to 10% by mass relative to an entirety of the mixed powder.

### (Aspect 4)

The method according to any one of Aspects 1 to 3,
wherein the mixed powder is packed in a reaction vessel, and
a packing ratio of the anti-sintering agent relative to a volume of the reaction vessel is in a range from 50% to 80%.

### (Aspect 5)

The method according to any one of Aspects 1 to 4,
wherein an average particle diameter of the manganese particles is from 5 µm to 300 µm.

### (Aspect 6)

The method according to any one of Aspects 1 to 5,
wherein an average particle diameter of the aluminum source is from 0.1 µm to 300 µm.

### (Aspect 7)

The method according to any one of Aspects 1 to 6,
wherein the calorizing is performed in a pressurized environment.

### (Aspect 8)

The method according to Aspect **7,**
wherein the pressurized environment is achieved by introduction of an inert gas into a reaction vessel that is airtightly sealed.

### (Aspect 9)

The method according to Aspect 7,
wherein the pressurized environment is achieved by a gas generated from the mixed powder packed in a reaction vessel that is airtightly sealed.

### (Aspect 10)

Magnetic particles, including:
a manganese-aluminum alloy; and
alumina,
wherein an existence proportion of the alumina contained in the magnetic particles is in a range from 0.1% by mass to 15% by mass,
an existence proportion of the manganese-aluminum alloy contained in the magnetic particles is in a range from 85% by mass to 99% by mass,
the manganese-aluminum alloy contains a τ phase, and
an existence proportion of the τ phase contained in the magnetic particles is in a range from 25% by mass to 99% by mass.

### (Aspect 11)

The magnetic particles according to Aspect 10,
wherein the manganese-aluminum alloy further contains at least one selected from an ε phase, a β phase, and a γ phase.

### (Aspect 12)

The magnetic particles according to Aspect 11,
wherein the ε phase contained in the manganese-aluminum alloy is in an amount of 10% by mass or less.

### (Aspect 13)

The magnetic particles according to any one of Aspects 10 to 12,
wherein the manganese-aluminum alloy contains from 65% by mass to 75% by mass of manganese and from 25% by mass to 35% by mass of aluminum.

### (Aspect 14)

The magnetic particles according to any one of Aspects 10 to 13,
wherein the alumina is unevenly distributed on an outermost surface of the magnetic particles.

### (Aspect 15)

The magnetic particles according to any one of Aspects 10 to 14,
wherein an a-axis of a lattice of the τ phase of the magnetic particles is shorter than 2.772 Å, which is a value of an a-axis of a lattice constant written in a database, and
a C-axis of the lattice of the τ phase of the magnetic particles is longer than 3.540 Å, which is a value of a C-axis of a lattice constant written in the database.

### (Aspect 16)

The magnetic particles according to Aspect 15,
wherein the a-axis of the lattice of the τ phase of the magnetic particles is 0.2% or more shorter than the a-axis of the lattice constant written in the database.

### (Aspect 17)

The magnetic particles according to Aspect 15 or 16,
wherein the C-axis of the lattice of the τ phase of the magnetic particles is 2% or more longer than the C-axis of the lattice constant written in the database.

### (Aspect 18)

A MnAl-based permanent magnet, including:
the magnetic particles of any one of Aspects 10 to 17.

This application claims priority based on Japanese Patent Application No. 2022-091091, filed June 3, 2022, the entire contents of which are hereby incorporated by reference.

### REFERENCE SIGNS LIST

- 352:: manganese particles
- 354:: aluminum source
- 358:: anti-sintering agent
- 365:: void

## Claims

1. A method for producing magnetic particles containing a manganese-aluminum alloy, the method comprising:
mixing manganese particles, an aluminum source, an activator containing a halide, and an anti-sintering agent to obtain a mixed powder;
heating the mixed powder to a temperature in a range of 1,000 °C to 1,235 °C to calorize the manganese particles by utilizing gaps between particles of the anti-sintering agent formed by the anti-sintering agent, to obtain a treated mixture containing magnetic particles containing a manganese-aluminum alloy,
wherein a mass ratio of aluminum to manganese (Al/Mn) in the manganese-aluminum alloy is in a range from 25/75 to 35/65; and
removing the anti-sintering agent from the treated mixture to recover the magnetic particles containing the manganese-aluminum alloy.

2. The method according to claim 1,
wherein the activator contains at least one selected from the group consisting of ammonium chloride, aluminum chloride, and aluminum fluoride.

3. The method according to claim 1 or 2,
wherein an amount of the activator is in a range from 0.1% by mass to 10% by mass relative to an entirety of the mixed powder.

4. The method according to claim 1 or 2,
wherein the mixed powder is packed in a reaction vessel, and
a packing ratio of the anti-sintering agent relative to a volume of the reaction vessel is in a range from 50% to 80%.

5. The method according to claim 1 or 2,
wherein an average particle diameter of the manganese particles is from 5 µm to 300 µm.

6. The method according to claim 1 or 2,
wherein an average particle diameter of the aluminum source is from 0.1 µm to 300 µm.

7. The method according to claim 1 or 2,
wherein the calorizing is performed in a pressurized environment.

8. The method according to claim 7,
wherein the pressurized environment is achieved by introduction of an inert gas into a reaction vessel that is airtightly sealed.

9. The method according to claim 7,
wherein the pressurized environment is achieved by a gas generated from the mixed powder packed in a reaction vessel that is airtightly sealed.

10. Magnetic particles, comprising:
a manganese-aluminum alloy; and
alumina,
wherein an existence proportion of the alumina contained in the magnetic particles is in a range from 0.1% by mass to 15% by mass,
an existence proportion of the manganese-aluminum alloy contained in the magnetic particles is in a range from 85% by mass to 99% by mass,
the manganese-aluminum alloy contains a τ phase, and
an existence proportion of the τ phase contained in the magnetic particles is in a range from 25% by mass to 99% by mass.

11. The magnetic particles according to claim 10,
wherein the manganese-aluminum alloy further contains at least one selected from an ε phase, a β phase, and a γ phase.

12. The magnetic particles according to claim 11,
wherein the ε phase contained in the manganese-aluminum alloy is in an amount of 10% by mass or less.

13. The magnetic particles according to claim 10 or 11,
wherein the manganese-aluminum alloy contains from 65% by mass to 75% by mass of manganese and from 25% by mass to 35% by mass of aluminum.

14. The magnetic particles according to claim 10 or 11,
wherein the alumina is unevenly distributed on an outermost surface of the magnetic particles.

15. The magnetic particles according to claim 10 or 11,
wherein an a-axis of a lattice of the τ phase of the magnetic particles is shorter than 2.775 Å, which is a value of an a-axis of a lattice constant written in a database, and
a C-axis of the lattice of the τ phase of the magnetic particles is longer than 3.540 Å, which is a value of a C-axis of a lattice constant written in the database.

16. The magnetic particles according to claim 15,
wherein the a-axis of the lattice of the τ phase of the magnetic particles is 0.2% or more shorter than the a-axis of the lattice constant written in the database.

17. The magnetic particles according to claim 15,
wherein the C-axis of the lattice of the τ phase of the magnetic particles is 2% or more longer than the C-axis of the lattice constant written in the database.

18. A MnAl-based permanent magnet, comprising:
the magnetic particles of claim 10 or 11.
